# FASCICULE DE BREVET EUROPEEN

(11) **EP 0 732 227 B1**
(45) Date de publication et mention de la délivrance du brevet: **21.06.2000**
(21) Numéro de dépôt: 96103422.0
(22) Date de dépôt: 05.03.1996
(51) Int. Cl.: B60C 9/18, B60C 9/22, B60B 15/08

(54) **Renforcement pour pneumatiques et dispositif de coupe pour préparer un tel renforcement**
Verstärkung für Reifen und Schneidevorrichtung zu ihrer Herstellung
Reinforcement for tyres and cutting device for the preparation of the same

(30) Priorité: 16.03.1995 FR 9503300
(43) Date de publication de la demande: 18.09.1996
(73) Titulaire: COMPAGNIE GENERALE DES ETABLISSEMENTS MICHELIN-MICHELIN & CIE, 63040 Clermont-Ferrand Cédex (FR)
(72) Inventeur: Lescoffit, Claude, F-63000 Clermont-Ferrand (FR)
(74) Mandataire: Bauvir, Jacques

(56) Documents cités:
- EP-A- 0 287 496
- DE-B- 1 091 890
- DE-B- 1 174 493
- DE-C- 197 334
- FR-A- 2 510 950
- US-A- 4 167 130
- PATENT ABSTRACTS OF JAPAN vol. 010, no. 083 (M-466), 2 Avril 1986 & JP-A-60 224530 (MAZDA KK), 8 Novembre 1985,
- PATENT ABSTRACTS OF JAPAN vol. 012, no. 098 (M-680), 31 Mars 1988 & JP-A-62 231802 (BRIDGESTONE CORP), 12 Octobre 1987,

## Description

La présente invention concerne les pneumatiques, et plus particulièrement la structure de renforcement de ceux-ci.

On sait que les pneumatiques sont usuellement renforcés par des câbles ou assemblages ou fils, que l'on désignera de façon générique par le terme "fil" dans la présente demande. Un paramètre d'architecture important est l'angle que forment ces fils par rapport à une référence normalisée bien connue des hommes du métier, à savoir le plan médian perpendiculaire à l'axe de rotation du pneumatique. La présente demande de brevet se rapporte notamment aux renforcements à zéro degré.

L'état de la technique connaît de nombreux exemples d'utilisation de fils à zéro degré pour renforcer les flancs ou le sommet des pneumatiques. Citons à titre d'exemple la demande FR 94/04353 ou la demande publiée JP 62/231802. L'implantation de fils à zéro degré pour renforcer des pneumatiques présente de nombreux intérêts bien connus, et ce n'est pas le propos de la présente demande de les rappeler. Mais une telle implantation a pour inconvénient majeur de ne pas se prêter à la ou aux conformations rencontrées pendant les différentes phases de la fabrication d'un pneumatique.

Afin d'apporter une solution à ces problèmes de conformation, une technique bien connue consiste à couper les fils à zéro degré en tronçons. On convient d'appeler "tronçon" le morceau de fil compris entre les coupes. La longueur L d'un tel tronçon est un paramètre de dimensionnement du pneumatique. Le brevet DE 1091890 illustre cette technique. Il y est décrit une méthode de fabrication d'un pneumatique comportant une carcasse croisée sur laquelle est disposée une ceinture ne comportant que des fils à zéro degré. Ceux-ci ne sont pas continus circonférentiellement. Le renforcement déposé le long d'un périmètre est constitué par un certain nombre de tronçons successifs. La ceinture est constituée en répétant latéralement la même disposition, avec un décalage circonférentiel entre deux fils à zéro degré adjacents, de sorte que les coupures isolant les tronçons soient disposées en quinconce. Par "latéralement", on désigne une position située de façon adjacente à la position de référence, et sensiblement au même niveau dans l'épaisseur du pneumatique. Dans une nappe de sommet, une position latérale est une position décalée axialement par rapport à la position de référence, alors que dans le flanc, le décalage serait radial. Plus généralement, dans une fabrication par couches successives, «latéralement» signifie à côté dans la même couche.

Ainsi, lors de la conformation, les extrémités des tronçons s'éloignent les unes des autres. Il subsiste cependant un chevauchement entre tronçons adjacents latéralement. Par dimensionnement, on peut régler ce chevauchement pour qu'il soit suffisant pour assurer, la structure de renforcement du pneumatique étant figée par la vulcanisation, la reprise des efforts d'extension orientés circonférentiellement.

Ce principe bien connu s'avère très intéressant. Malheureusement, il n'a pas rencontré de succès sur le plan industriel. Il conduit en effet à des cadences de pose des fils à zéro degré beaucoup trop lentes si l'on construit le renforcement en déposant un seul fil trancanné, c'est à dire bobiné sur l'ébauche en cours de confection en faisant tourner celle-ci et en déplaçant une tête de guidage du fil latéralement tout en coordonnant ces deux mouvements de façon à obtenir le pas de pose et la densité de fil prévus. Si l'on envisage de déposer une seule nappe, par exemple en enroulant ladite nappe en un tour sur l'ébauche crue pendant son assemblage, il faut préparer à l'avance des incisions souhaitées sur ladite nappe. Il est bien difficile de garantir dans ce cas que l'on coupe exactement tous les fils prévus.

Le problème non surmonté à ce jour consiste à être capable, à des endroits rigoureusement prédéterminés dans une nappe de fils parallèles, de découper exactement tous les fils là où l'on veut créer des tronçons. Or ce problème doit tenir compte de tolérances réalistes sur le positionnement relatif des fils par rapport à l'outil de coupe.

Ce problème est tout particulièrement ardu lorsque l'on découpe non pas un fil individuel pour en prélever des tronçons, mais lorsque l'on souhaite préparer une nappe de fils. Dans ce cas, il n'est pas possible de maintenir de toutes parts le fil qu'il faut sectionner. Le fil peut se dérober sous l'action du couteau et échapper à celui-ci latéralement. Dans ce cas, si l'on consulte par exemple la figure 1 du brevet DE 1091890 cité ci-dessus, le résultat pratique obtenu en utilisation industrielle est que certaines des découpes ne sont pas réalisées. Dans ce cas, on conçoit que la structure réalisée se prête à la conformation bien moins aisément que souhaité. Ou pire encore, comme les défauts de coupe sont aléatoires, le pneumatique se conforme de façon non homogène.

L'invention a pour objectif de régler ce problème. L'invention vise donc à pouvoir utiliser des nappes de fils à zéro degré pour l'avantage que présente cette méthode de permettre des temps de cycle très courts au stade de l'assemblage du pneumatique sur un tambour.

L'invention vise à proposer une technique de préparation de découpes dans une nappe de fils parallèles. L'invention trouve une application tout particulièrement intéressante lorsque cette nappe est destinée à être posée sur l'ébauche du pneumatique pour constituer un renforcement à zéro degré. La technique de préparation doit être suffisamment fiable pour que l'on puisse garantir que toutes les découpes souhaitées ont effectivement été réalisées.

L'invention propose un dispositif de coupe d'une nappe de fils parallèles, comportant un support de référence pour imposer une orientation connue auxdits fils parallèles, comportant un couteau de largeur C donnée, ledit couteau étant disposé transversalement par rapport à ladite orientation connue, le dispositif comportant des moyens pour provoquer la coupe desdits fils par ledit couteau, et comportant des moyens pour déplacer transversalement ledit couteau par rapport au support par pas d'une distance inférieure à deux fois ladite largeur C, et des moyens pour déplacer longitudinalement ladite nappe par rapport audit support.

Entre chacune des incisions, on laisse donc un espace plus faible que la largeur des incisions. Le but poursuivi est que le nombre de fils non découpés entre chaque incision soit inférieur au nombre de fils découpés par chaque incision. Par exemple, si l'on souhaite laisser quatre fils non découpés, la largeur C du couteau est telle que chaque incision découpe six fils au moins, c'est à dire deux de plus. Ensuite, on décale la nappe longitudinalement par rapport au couteau d'une fraction de pas, le pas étant conditionné par la longueur L des tronçons. Typiquement, ce décalage correspond à un demi pas. A cette position longitudinale, on réalise des incisions de la même façon, sauf que, et c'est un autre aspect important de l'invention, les incisions sont cette fois disposées en quinconce par rapport aux précédentes, et avec un certain chevauchement.

L'invention s'étend aussi à un pneumatique dont la structure de renforcement comporte des tronçons de fils sensiblement rectilignes et disposés parallèlement entre eux et parallèle à une direction α donnée, chaque tronçon ayant deux extrémités, lesdits tronçons étant disposés de façon à comprendre de façon répétitive l'arrangement suivant : un ou plusieurs tronçons intermédiaires de longueur M, bordés latéralement de part et d'autre par un tronçon latéral de longueur L supérieure à M, chacun desdits tronçons latéraux étant disposé en partie en regard d'un tronçon intermédiaire et en partie débordant dans la direction α au delà d'une seule des extrémités dudit tronçon intermédiaire, lesdites parties débordantes de chacun des tronçons latéraux étant situées circonférentiellement chacune d'un seul côté du ou desdits tronçons intermédiaires, et parallèlement à la direction α respectivement de part et d'autre du ou desdits tronçons intermédiaires, chacune des parties débordantes étant elle-même bordée latéralement par un autre tronçon intermédiaire.

En quelque sorte, l'invention repose sur l'observation que, dans un renforcement de fils à zéro degré, la quantité de fils à zéro degré prévue par le concepteur du pneumatique est ou peut facilement être fixée à un niveau légèrement surabondant. Les fils intermédiaires n'ont pas la longueur prévue pour les tronçons. Typiquement, celle-ci est réduite de moitié. Le renforcement de fils à zéro degré ainsi fabriqué a sensiblement le même effet de blocage de l'extension circonférentielle que si les fils intermédiaires n'existaient pas. La présence des fils intermédiaires ne s'oppose pas à la bonne transmission de l'effort entre les fils latéraux.

Considérons à nouveau la difficulté qu'il y a à garantir que tous les fils situés sous un couteau soient effectivement coupés par celui-ci. On peut observer que, dans le cadre de la présente invention, si des fils se dérobent latéralement et ne sont pas coupés par l'action des couteau, la conséquence est simplement qu'il n'y aura pas de fil que l'on qualifie d'intermédiaire, et que l'on augmente (d'autant que de fils intermédiaires manquants) le nombre de tronçons de fils ayant la longueur théorique L voulue. On a observé qu'un pneumatique ainsi réalisé bénéficiait des propriétés que l'on souhaite lui conférer par la présence de fils à zéro degré. On a aussi observé que sa conformation reste bien homogène, même si l'on ne maîtrise pas parfaitement le nombre ou même la présence de fils intermédiaires entre les fils dits "latéraux".

L'invention sera parfaitement comprise grâce à la consultation de la description suivante, illustrant à l'aide des figures jointes et de façon non limitative, des exemples de réalisation concrets permettant de saisir tous les avantages que l'on peut en escompter. Tous les explications données dans la suite concernent plus particulièrement les renforcements à zéro degré. Cependant, l'invention pourra trouver application notamment chaque fois que des problèmes similaires de conformation se posent. Cela peut concerner un éventail d'angle α plus large, par exemple compris entre 0° et 20°.
La figure 1 schématise un dispositif de coupe selon l'invention ;
la figure 2 montre le même dispositif de coupe à un stade de fonctionnement ultérieur ;
la figure 3 montre le même dispositif de coupe à un autre stade de fonctionnement ultérieur ;
la figure 4 montre une variante d'un dispositif de coupe ;
la figure 5 est un écorché d'un pneumatique selon l'invention ;
la figure 6 montre l'allure que prend après conformation une nappe préparée suivant le principe de l'invention.

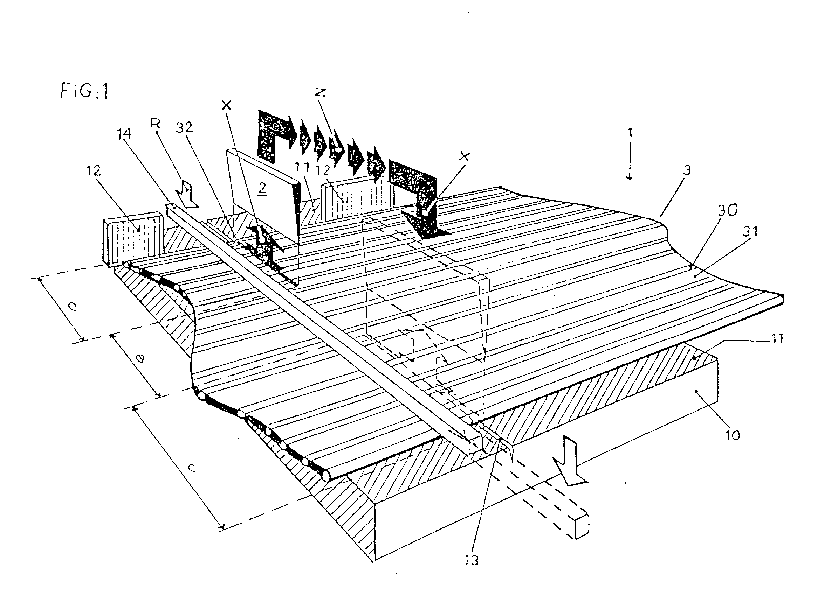

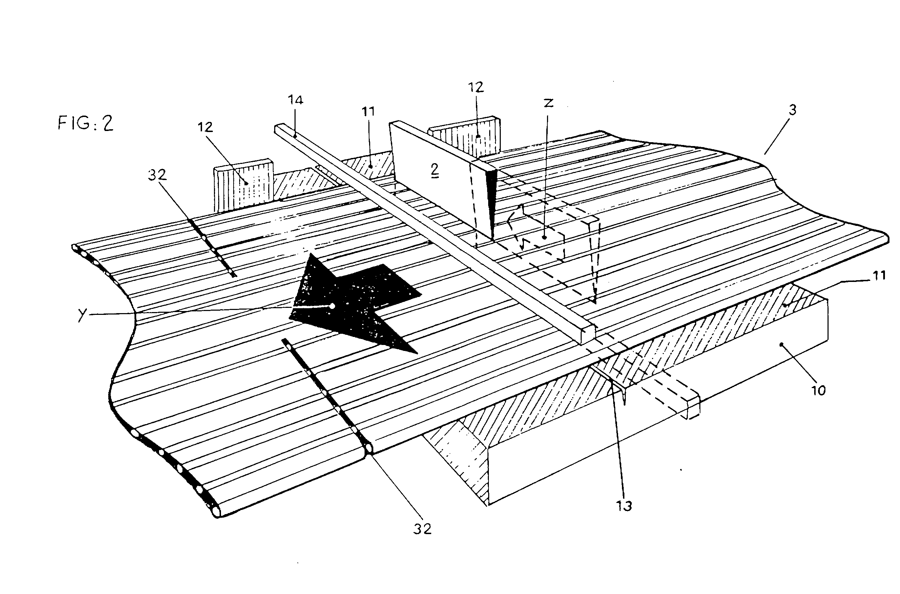

A la figure 1, on a représenté les organes essentiels d'un dispositif de coupe 1 comportant un support de référence 10. Pour mettre en oeuvre l'invention, il est proposé de partir d'une nappe 3 comportant des fils parallèles 30 noyés dans un caoutchouc de calandrage 31. Une telle nappe 3 est déroulée et déposée à plat sur ledit support 10, le long d'un couloir de guidage 11. Elle est avancée selon la direction définie par les butées 12 (visualisée par la flèche Y à la figure 2), celle-ci étant parallèle aux fils 30.

Le dispositif 1 comporte un couteau 2 de largeur C, que l'on voit à la figure 1 en traits pleins dans une première position, et en vue fantôme dans une position décalée transversalement. Il comporte encore une barre de maintien 14 (dont l'extrémité de droite est représentée en vue fantôme) pour bloquer la nappe 3 sur le couloir 11 pendant l'action du couteau 2. Un tel dispositif permet de découper plusieurs fils à la fois, par groupes de fils adjacents, en adoptant une largeur de coupe (largeur C du couteau) appropriée.

On va expliquer dans la suite que, grâce à une combinaison de deux mouvements relatifs entre couteau et nappe de fils, à savoir un mouvement transversal croisant les fils et un mouvement longitudinal parallèle aux fils, il est possible de réaliser des incisions 32 à tous les endroits souhaitables.

De préférence, plusieurs incisions 32 sont alignées transversalement (c'est à dire selon une direction par exemple perpendiculaire à l'orientation des fils 30 et en tout cas assez éloignée d'une direction parallèle aux fils). Pour réaliser ces incisions, on peut par exemple déplacer transversalement (voir flèche Z) le couteau 2 en face de plusieurs positions de découpes successives, la nappe 3 restant immobile. Suivant un aspect de l'invention, l'amplitude C+B du déplacement transversal entre deux positions de découpe successives est telle que B est inférieur à la largeur C du couteau (voir figure 1). D'autres informations sur le choix de la largeur C et le choix de la distance B seront données par la suite.

Notons encore que le support 10 comporte une fente 13 disposée en regard du couteau 2. Le couteau 2 peut être animé d'un mouvement de rapprochement et d'éloignement du support, comme schématisé par la flèche X. Ce mouvement amène la partie tranchante du couteau à avancer légèrement au delà de la surface 11 du support 10, d'où la présence de la fente 13. Ce mouvement permet de sectionner les fils de renforcement en agissant comme une guillotine.

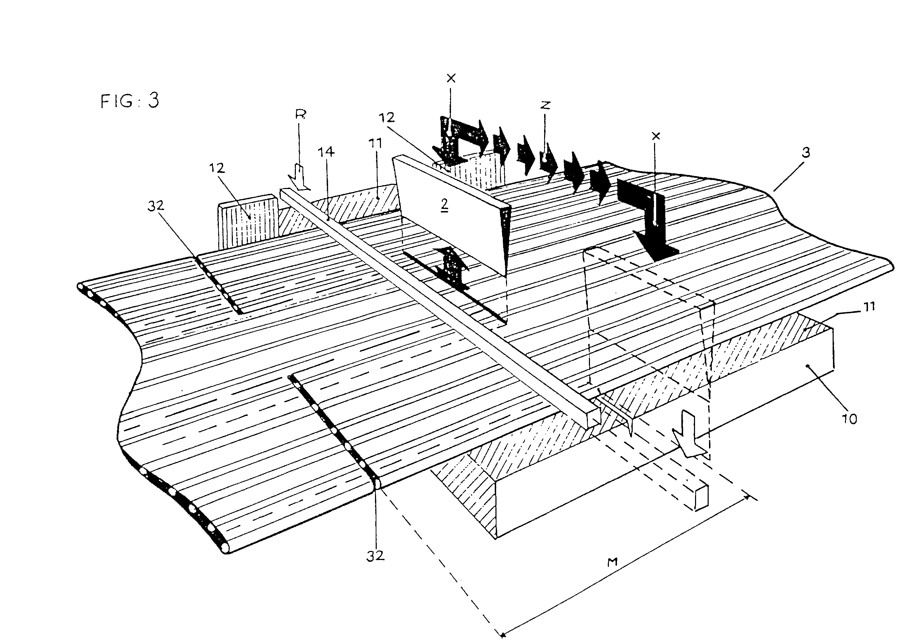

Le mouvement d'avance ultérieur de la nappe 3 est un mouvement pas à pas. Notons au passage que l'orientation du couteau 2 est sensiblement perpendiculaire à cette direction Y. On relève la barre de maintien 14 suivant un mouvement schématisé par la flèche R, puis on déplace la nappe 3 longitudinalement par rapport au support (direction Y à la figure 2), d'un pas M présélectionné en fonction de la taille L des tronçons que l'on veut réaliser. A la position d'arrêt suivante, illustrée à la figure 3, on abaisse à nouveau la barre de maintien 14 pour réaliser une ou plusieurs nouvelles découpes. La première de celles-ci doit être réalisée à un endroit décalé transversalement par rapport à la dernière des découpes réalisées avant déplacement de la nappe 3. Plus précisément, suivant un aspect de l'invention, il convient que cet endroit soit centré sur l'intervalle existant entre les incisions 32 réalisées à la position d'arrêt précédente. Ici encore, comme précédemment, on peut réaliser plusieurs incisions alignées transversalement en déplaçant transversalement le couteau 2 chaque fois de la même amplitude C+B telle que B est inférieur à la largeur C du couteau.

De proche en proche tout le long de la nappe, on peut ainsi réaliser des découpes sensiblement alignées dans la direction transversale, et qui se chevauchent légèrement dans la direction circonférentielle.

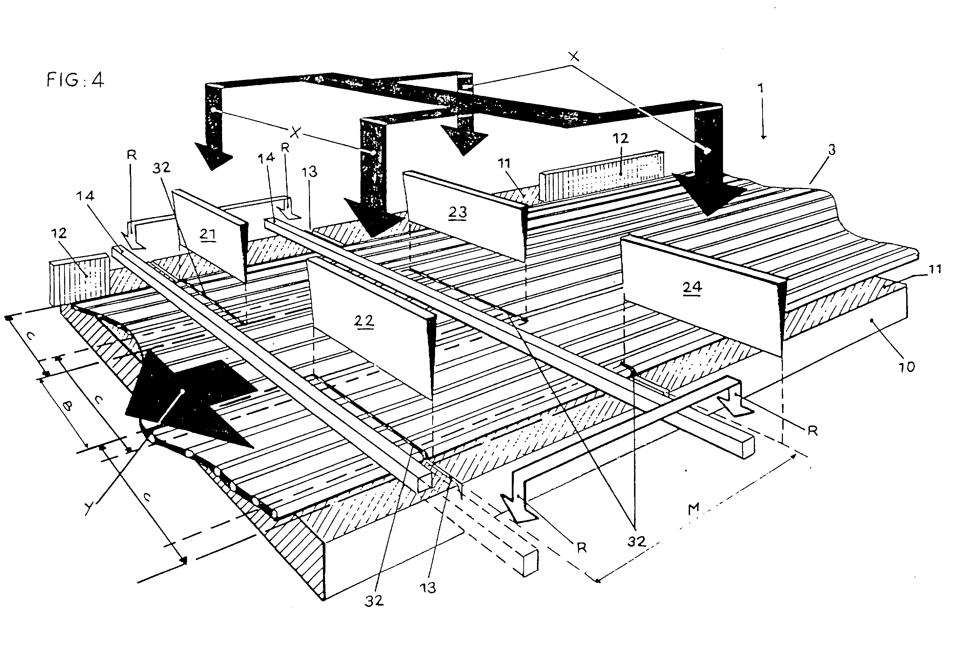

La figure 4 illustre une variante de la machine conçue pour réaliser plusieurs incisions simultanément, de sorte qu'il ne soit pas nécessaire d'animer un couteau de mouvements selon Z. Le dispositif illustré ici est conçu pour réaliser le même schéma de découpes que précédemment. Le dispositif 1 comporte le nombre de couteaux nécessaires pour réaliser ce que l'on pourrait appeler la disposition élémentaire d'incisions. Il suffit de reproduire ladite disposition décalée chaque fois d'un pas en Y tout le long de la nappe, la longueur dudit pas valant L.

L'invention propose aussi un dispositif de coupe qui réalise d'un seul coup plusieurs rangées de découpes alignées transversalement, les découpes d'une rangée chevauchant légèrement les découpes de l'autre rangée en observant lesdites découpes dans le sens des fils de renforcement. Un tel dispositif de coupe d'une nappe de fils parallèles, comportant un support de référence pour imposer une orientation connue auxdits fils parallèles, comporte un premier ensemble de couteaux, lesdits couteaux étant disposés transversalement par rapport à ladite orientation connue, écartés les uns des autres transversalement, et il comporte au moins un autre ensemble de couteaux disposés en quinconce par rapport aux couteaux dudit premier ensemble, les couteaux dudit second ensemble chevauchant partiellement les couteaux dudit premier ensemble, et comporte des moyens pour provoquer la coupe desdits fils par lesdits couteaux.

Le dispositif 1 représenté à la figure 4 comporte une première rangée de couteaux 21 et 22, et une seconde rangée de couteaux 23 et 24, décalés transversalement (c'est à dire selon Z) par rapport aux couteaux de la première rangée de telle façon que le couteau 23 est centré sur l'espace entre les couteaux 21 et 22. La seconde rangée est décalée longitudinalement (c'est à dire selon Y) par rapport à la première d'une distance correspondant à M. Quant à l'orientation des rangées de couteaux, elle est ici aussi sensiblement perpendiculaire à la direction Y.

Les couteaux sont tous ancrés sur un plateau, non représenté pour ne pas surcharger le dessin. Ce plateau peut être animé d'un mouvement de rapprochement et d'éloignement du support, comme schématisé par les flèches X, dont le rôle est tout à fait équivalent aux mouvements selon X décrits ci-dessus. Ce mouvement amène la partie tranchante des couteaux à avancer légèrement au delà de la surface 11 du support 10, d'où la présence des fentes 13.

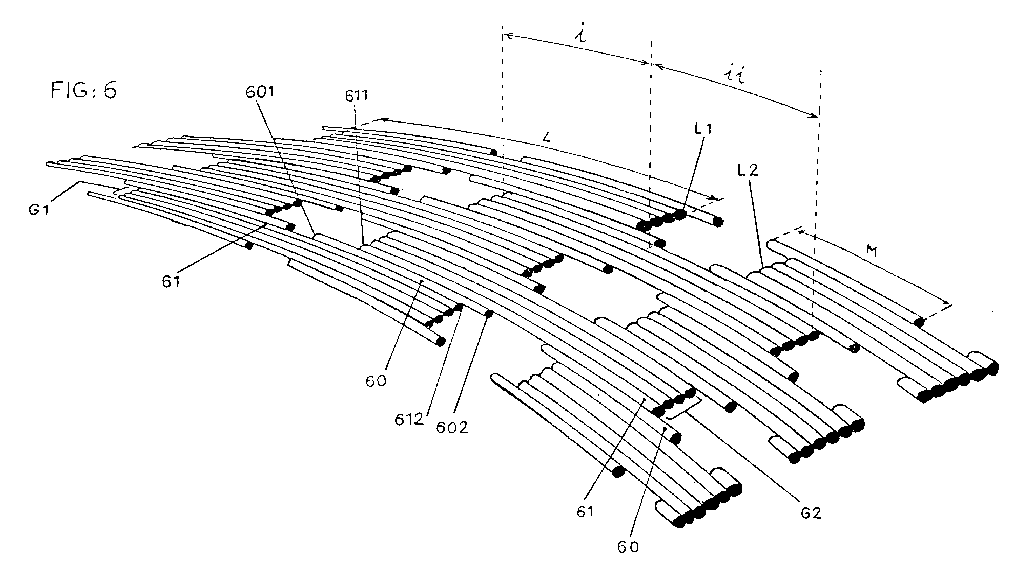

Le cycle de base du dispositif de coupe est le suivant. En considérant d'abord que la nappe 3 est en arrêt, les barres de maintien 14 sont abaissées (flèche R) pour bloquer la nappe 3 sur le couloir 11. Le plateau portant les couteaux 21, 22, 23, 24 est abaissé (flèche X) pour réaliser sur la nappe autant d'incisions 32 que de couteaux. Ledit plateau est ensuite relevé, pendant que la nappe est avancée d'une distance correspondant à la longueur des tronçons de fils (voir L à la figure 6), puis de nouveau arrêtée et maintenue à cette position d'arrêt. On répète ensuite ce cycle de base pour réaliser, de proche en proche, des incisions tout le long de la nappe 3. On réalise de la sorte un produit semi-fini qui peut être utilisé sur les serviceurs des machines d'assemblage de pneumatique. Celles-ci comportent, comme bien connu, des serviceurs utilisés pour enrouler des quantités prédéterminées de nappes de renforcement lors de l'assemblage de pneumatique.

Revenons maintenant sur le choix de C et de B. Il s'agit de valeurs fixées en fonction de l'architecture du pneumatique que l'on veut fabriquer. Supposons par exemple que le renforcement du pneumatique doive comporter des groupes de 4 tronçons de longueur L de fils à zéro degré. La largeur du couteau est choisie de façon à ce que celui-ci puisse sectionner 6 fils, et non pas 4. En toute généralité, si "n" est le nombre idéal de fils dans un groupement de tronçons identiques (ici n=4), alors la largeur d'un couteau est choisie de façon à ce que celui-ci soit capable de sectionner au moins un fil de plus de part et d'autre du groupement. Aux figures illustrant l'invention, on voit que C correspond à 4+2=6 fils. L'écartement entre couteaux d'une rangée est lui fixé en fonction du nombre "n" de fil qu'un groupement doit comporter. Dans cet exemple, ce nombre minimal à été fixé à 4, et il conditionne le choix de la distance B, qui doit correspondre à ce nombre "n" de fils. Quant à l'écart M (distance entre deux rangées de couteaux ou pas de l'avance dans le dispositif de la première variante), il correspond ici à la moitié de la longueur L choisie pour chaque tronçon de fils.

On pourrait utiliser une seule rangée comportant plusieurs couteaux. Dans ce cas, le plateau portant les couteaux doit pouvoir être déplacé transversalement pour réaliser les découpes en quinconce. On peut ainsi construire un dispositif qui, en référence à la figure 4, ne comporterait que les couteaux 21 et 22, ou plus généralement le nombre de couteau suffisant pour réaliser en un seul mouvement de guillotine toutes les découpes d'une rangée de découpes.

Un tel dispositif de coupe d'une nappe de fils parallèles, comportant un support 10 de référence pour imposer une orientation connue auxdits fils parallèles, comporte un ensemble de couteaux 21, 22 de largeur C, écartés les uns des autres transversalement d'une distance inférieure à C, lesdits couteaux 21, 22 étant disposé transversalement par rapport à ladite orientation connue, le dispositif comportant des moyens pour provoquer la coupe desdits fils par lesdits couteaux, et comportant des moyens pour déplacer transversalement lesdits couteaux par rapport au support par pas d'une distance inférieure à ladite largeur C, et des moyens pour déplacer longitudinalement ladite nappe par rapport audit support. Il est en effet nécessaire de déplacer les couteaux à la fois transversalement et longitudinalement par rapport à la nappe entre deux découpes.

Il va de soi que l'on peut concevoir de nombreuses variantes au principe de prédécoupe de nappes qui vient d'être exposé. On pourrait utiliser plus de deux rangées. Par exemple, on peut reproduire à l'identique les deux rangées de couteaux pour prédécouper deux fois plus d'incisions à chaque mouvement du plateau vers le support, afin d'accélérer la préparation de la nappe sans accélérer la cadence de fonctionnement du dispositif.

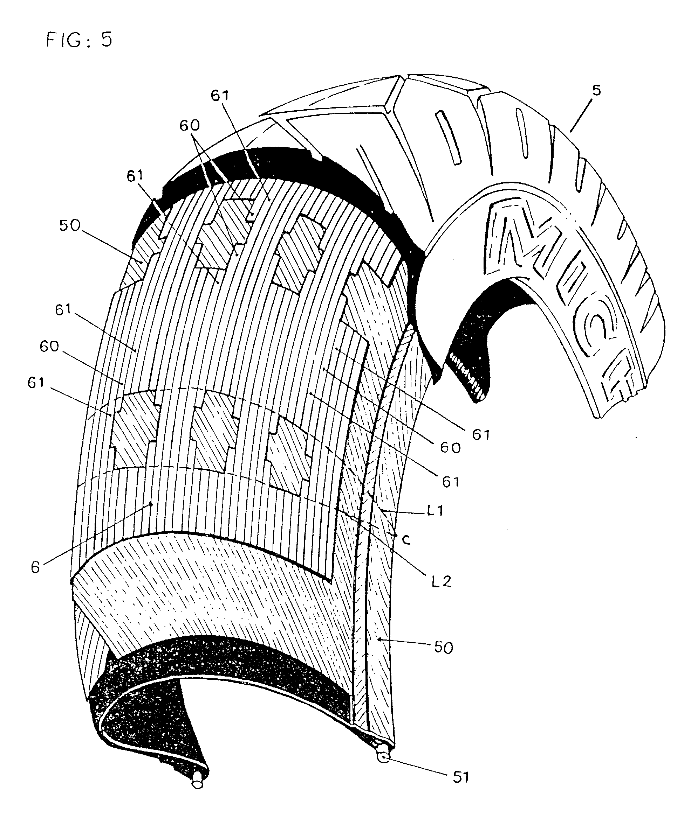

La figure 5 montre un pneumatique, avec un écorché laissant voir l'allure du renforcement comportant des fils à zéro degré après conformation et vulcanisation. On voit que le pneumatique 5 comporte deux nappes de carcasse croisées 50, retournées autour de tringles 51. Il comporte une ceinture 6 déposée pendant l'assemblage du pneumatique par enroulement d'un tour d'une nappe préparée comme indiquée ci-dessus.

La figure 6 montre les fils d'une nappe prédécoupée selon le principe de l'invention, et conformée comme elle peut apparaître à l'intérieur d'un pneumatique. Si aucun fil n'a échappé aux couteaux pendant l'opération de pré-découpe de la nappe, alors celle-ci comporte de façon répétitive l'arrangement suivant : un tronçon intermédiaire 60 de longueur L/2 (ici un seul), bordé latéralement de part et d'autre d'un tronçon latéral 61 de longueur supérieure à L, chacun desdits tronçons latéraux étant disposé en partie (i) en regard d'un tronçon intermédiaire et en partie (ii) débordant circonférentiellement au delà d'une seule des extrémités dudit tronçon intermédiaire, respectivement 601 et 602. La partie (ii) est la partie complémentaire de la partie (i) sur chaque tronçon latéral 61. Lesdites parties débordantes (ii) de chacun des tronçons latéraux 61 sont situées circonférentiellement chacune d'un seul côté dudit tronçon intermédiaire 60, et respectivement de part et d'autre du tronçon intermédiaire 60. Lesdites parties débordantes (ii) sont elles-mêmes bordées latéralement par un autre tronçon intermédiaire (voir les explications sur les mouvements survenant lors de la conformation dans le paragraphe ci-dessous).

Lors de la conformation, les lèvres L1 et L2 des incisions vont se séparer les unes des autres, laissant apparaître à la figure 5 une nappe de carcasse 50. Notons encore qu'à la figure 5, on a représenté en traits discontinus l'évolution de la position des lèvres L1 et L2, l'intersection de ces traits au point C correspondant au diamètre de pose d'une nappe pendant la confection du pneumatique. Les tronçons intermédiaires 60 vont subir un cisaillement dû aux mouvements opposés des tronçons latéraux adjacents inclus dans les groupes G1 et G2 de tronçons qui les bordent latéralement. Chaque tronçon intermédiaire 60 va prendre une position comprise entre les deux limites suivantes : l'extrémité 601 peut se retrouver alignée avec les extrémités 611 ou bien l'extrémité 602 peut se retrouver alignée avec les extrémités 612. En général, la position finale sera le plus souvent proche d'une position médiane entre ces positions extrêmes, comme cela est représenté aux figures 5 et 6.

Grâce à cette invention, si l'une ou l'autre des opérations de prédécoupe ne se passe pas comme expliqué, la conséquence en sera que, localement, il n'y aura pas de fil intermédiaire 60, l'un des groupements adjacent comportant un fil de plus que prévu, donc 5 au lieu de 4 dans l'exemple donné. Ceci ne nuit en rien à la qualité du pneumatique. L'invention propose donc une technique de réalisation acceptant une grande tolérance sur la position du ou des couteaux par rapport à la position des fils dans la nappe. Le renforcement conçu selon le principe qui vient d'être exposé peut être utilisé à tout endroit dans la structure de renforcement d'un pneumatique, par exemple dans un flanc ou dans une ceinture, pour ne citer que les applications les plus courantes.

## Revendications

1. Pneumatique dont la structure de renforcement comporte des tronçons de fils sensiblement rectilignes et disposés parallèlement entre eux et parallèle à une direction a donnée, chaque tronçon ayant deux extrémités, lesdits tronçons étant disposés de façon à comprendre de façon répétitive l'arrangement suivant : un ou plusieurs tronçons intermédiaires (60) de longueur M, bordés latéralement de part et d'autre par un tronçon latéral (61) de longueur L supérieure à M, chacun desdits tronçons latéraux étant disposé en partie (i) en regard d'un tronçon intermédiaire (60) et en partie (ii) débordant dans la direction a au delà d'une seule des extrémités dudit tronçon intermédiaire (60), lesdites parties débordantes (ii) de chacun des tronçons latéraux (61) étant situées circonférentiellement chacune d'un seul côté du ou desdits tronçons intermédiaires, et parallèlement à la direction a respectivement de part et d'autre du ou desdits tronçons intermédiaires, chacune des parties débordantes étant elle-même bordée latéralement par un autre tronçon intermédiaire.

2. Pneumatique selon la revendication 1, dans lequel les tronçons latéraux sont inclus dans des groupes de tronçons (G1, G2) adjacents, de longueur identique.

3. Pneumatique selon la revendication 1 ou 2, comportant pour chaque arrangement un seul tronçon intermédiaire (60).

4. Pneumatique selon l'une des revendications 1 à 3, dans lequel ladite longueur L des tronçons latéraux (61) vaut environ le double de la longueur M du ou des tronçons intermédiaires (60).

5. Pneumatique selon l'une des revendications 1 à 4, dans lequel ladite direction a est comprise entre 0° et 20°.

6. Dispositif de coupe d'une nappe de fils parallèles, comportant un support (10) de référence pour imposer une orientation connue auxdits fils parallèles, comportant un seul couteau (2) de largeur C donnée, ledit couteau (2) étant disposé transversalement par rapport à ladite orientation connue, le dispositif comportant des moyens pour provoquer la coupe desdits fils par ledit couteau, et comportant des moyens pour déplacer transversalement ledit couteau par rapport au support par pas d'une distance inférieure à deux fois ladite largeur C, et des moyens pour déplacer longitudinalement ladite nappe par rapport audit support.

7. Dispositif de coupe d'une nappe de fils parallèles, comportant un support (10) de référence pour imposer une orientation connue auxdits fils parallèles, comportant un ensemble de couteaux (21, 22) de largeur C, écartés les uns des autres transversalement d'une distance inférieure à C, lesdits couteaux (21, 22) étant disposé transversalement par rapport à ladite orientation connue, le dispositif comportant des moyens pour provoquer la coupe desdits fils par lesdits couteaux, et comportant des moyens pour déplacer transversalement lesdits couteaux par rapport au support par pas d'une distance inférieure à ladite largeur C, et des moyens pour déplacer longitudinalement ladite nappe par rapport audit support.

8. Dispositif de coupe d'une nappe de fils parallèles, comportant un support (10) de référence pour imposer une orientation connue auxdits fils parallèles, comportant un premier ensemble de couteaux (21, 22), lesdits couteaux étant disposés transversalement par rapport à ladite orientation connue, écartés les uns des autres transversalement, comportant au moins un autre ensemble de couteaux (23, 24) disposés en quinconce par rapport aux couteaux dudit premier ensemble, les couteaux dudit second ensemble chevauchant partiellement les couteaux dudit premier ensemble, et comportant des moyens pour provoquer la coupe desdits fils par lesdits couteaux.

9. Dispositif selon la revendication 7 ou 8, dans lequel lesdits couteaux de chaque ensemble sont alignés et sont disposés sensiblement perpendiculairement à ladite orientation connue.

## Patentansprüche

1. Reifen, dessen Verstärkungsaufbau im wesentlichen geradlinige Drahtstücke aufweist, die zueinander parallel und parallel zu einer vorgegebenen Richtung α angeordnet sind, wobei jedes Stück zwei Enden aufweist und die genannten Stücke derart angeordnet sind, daß sie in Wiederholung die folgende Anordnung aufweisen: ein oder mehrere Zwischenstücke (60) mit einer Länge M, die seitlich beiderseits durch ein seitliches Stück (61) mit einer Länge L begrenzt sind, die größer ist als M, wobei jedes der genannten seitlichen Stücke teilweise (i) einem Zwischenstück (60) gegenüberliegt und teilweise (ii) in Richtung α über eines der Enden des genannten Zwischenstücks (60) hinausläuft, wobei die hinauslaufenden Teile (ii) eines jeden seitlichen Stücks (61) in Umfangsrichtung jeweils auf einer Seite des oder der genannten Zwischenstücke angeordnet sind, sowie parallel zur Richtung α jeweils beiderseits der genannten Zwischenstücke, und wobei jedes der hinauslaufenden Teile seinerseits seitlich durch ein anderes Zwischenstück begrenzt ist.

2. Reifen nach Anspruch 1, worin die seitlichen Stücke in benachbarten Gruppen (G1, G2) aus Stücken mit identischer Länge enthalten sind.

3. Reifen nach Anspruch 1 oder 2, der für jede Anordnung ein einziges Zwischenstück (60) aufweist.

4. Reifen nach einem der Ansprüche 1 bis 3, worin die genannte Länge L der seitlichen Stücke (61) etwa das Doppelte der Länge M des oder der Zwischenstücke (60) beträgt.

5. Reifen nach einem der Ansprüche 1 bis 4, worin die genannte Richtung α zwischen 0° und 20° liegt.

6. Vorrichtung zum Einschneiden einer Lage aus parallelen Drähten, mit einem Bezugsträger (10), um den genannten parallelen Drähten eine bekannte Ausrichtung aufzuerlegen, einem einzigen Messer (2) mit vorgegebener Länge C, wobei das genannte Messer (2) in Bezug auf die genannte, bekannte Ausrichtung in Querrichtung angeordnet ist, und die Vorrichtung Mittel aufweist, um das Abschneiden der genannten Drähte durch das genannte Messer hervorzurufen, und mit Mitteln, um das genannte Messer in Bezug auf den Träger in Querrichtung um eine Strecke zu versetzen, die kleiner ist als das zweifache der genannten Breite C, sowie Mitteln, um die genannte Lage in Bezug auf den Träger in Längsrichtung zu verlagern.

7. Vorrichtung zum Einschneiden einer Lage aus parallelen Drähten, mit einem Bezugsträger (10), um den genannten parallelen Drähten eine bekannte Ausrichtung aufzuerlegen, einer Gruppe von Messern (21, 22) mit einer Breite C, die voneinander in Querreichtung um einen Abstand auseinanderliegen, der kleiner ist als C, wobei die genannten Messer (21, 22) in Bezug auf die genannte, bekannte Ausrichtung in Querrichtung angeordnet sind und die Vorrichtung Mittel aufweist, um das Abschneiden der genannten Drähte durch die genannten Messer hervorzurufen, und mit Mitteln, um die genannten Messer in Bezug auf den Träger um eine Teilung bzw. einen Schritt in Querrichtung über eine Strecke zu versetzen, die kleiner ist als die genannte Breite C, sowie mit Mitteln, um die genannte Lage in Bezug auf den genannten Träger in Längsrichtung zu versetzen.

8. Vorrichtung zum Einschneiden einer Lage aus parallelen Drähten, mit einem Bezugsträger (10), um den genannten parallelen Drähten eine bekannte Richtung aufzuerlegen, mit einer ersten Gruppe von Messern (21, 22), wobei die genannten Messer in Bezug auf die genannte, bekannte Ausrichtung in Querrichtung angeordnet sind und zueinander in Querrichtung beabstandet sind, mit mindestens einer anderen Gruppe von Messern (23, 24), die in Bezug auf die Messer der genannten ersten Gruppe versetzt angeordnet sind, wobei die Messer der genannten zweiten Gruppe teilweise die Messer der genannten ersten Gruppe überdecken, sowie mit Mitteln, um das Abschneiden der genannten Drähte durch die genannten Messer hervorzurufen.

9. Vorrichtung nach Anspruch 7 oder 8, worin die genannten Messer einer jeden Gruppe aufeinander ausgerichtet sind um im wesentlichen senkrecht zur genannten, bekannten Ausrichtung angeordnet sind.

## Claims

1. Tyre whose reinforcement structure comprises substantially rectilinear segments of cords disposed parallel to each other and parallel to a given direction α, each segment having two ends, said segments being disposed in such a way as to include the following repetitive arrangement: one or more intermediate segments (60) of length M, bordered laterally on each side by a lateral segment (61) of length L greater than M, each of said lateral segments being disposed in part (i) opposite an intermediate segment (60) and in part (ii) protruding in the direction α beyond only one of the ends of said intermediate segment (60), said protruding parts (ii) of each of the lateral segments (61) being situated circumferentially each on only one side of said intermediate segment or segments, and parallel to the direction α respectively on each side of said intermediate segment or segments, each of the protruding parts itself being bordered laterally by another intermediate segment.

2. Tyre according to claim 1, in which the lateral segments are included in groups of adjacent segments (G1, G2) of identical length.

3. Tyre according to claim 1 or 2, comprising a single intermediate segment (60) for each arrangement.

4. Tyre according to one of claims 1 to 3, in which said length L of the lateral segments (61) is about twice the length M of the intermediate segment or segments (60).

5. Tyre according to one of claims 1 to 4, in which said direction α is included between 0° and 20°.

6. Cutting device for a ply of parallel cords, comprised of a reference support (10) to impose a known orientation on said parallel cords, comprising a single blade (2) of given width C, said blade (2) being positioned transversely relative to said known orientation, the device comprising means for effecting the cutting of said cords by said blade, and comprising means to move said blade transversely relative to the support by steps of a distance less than twice said width C, and means to move said ply longitudinally relative to said support.

7. Cutting device for a ply of parallel cords, comprising a reference support (10) to impose a known orientation on said parallel cords, comprising a group of blades (21, 22) of width C, separated from each other transversely by a distance less than C, said blades (21, 22) being positioned transversely relative to said known orientation, the device comprising means for effecting the cutting of said cords by said blades, and comprising means to move said blades transversely relative to the support by steps of a distance less than said width C, and the means to move said ply longitudinally relative to said support.

8. Cutting device for a ply of parallel cords, comprising a reference support (10) to impose a known orientation on said parallel cords, comprising a first group of blades (21, 22), said blades being positioned transversely relative to said known orientation, separated from each other transversely, comprising at least one other group of blades (23, 24) positioned staggered relative to the blades of said first group, the blades of said second group partially overlapping the blades of said first group, and comprising means to effect the cutting of said cords by said blades.

9. Device according to Claim 7 or 8, in which said blades of each group are aligned and are arranged substantially perpendicular to said known orientation.
